(19) **Europäisches Patentamt / European Patent Office / Office européen des brevets**

(11) **EP 3 660 732 B1**

(12) **EUROPEAN PATENT SPECIFICATION**

(45) Date of publication and mention
of the grant of the patent:
**05.05.2021 Bulletin 2021/18**

(51) Int Cl.:
*G06K 9/00* *(2006.01)*        *G06Q 10/06* *(2012.01)*

(21) Application number: **19160156.6**

(22) Date of filing: **28.02.2019**

(54) **METHOD AND SYSTEM FOR ADAPTIVE SENSOR ARRANGEMENT**

VERFAHREN UND SYSTEM FÜR EINE ADAPTIVE SENSORANORDNUNG

PROCÉDÉ ET SYSTÈME POUR AGENCEMENT DE CAPTEUR ADAPTATIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2018 GR 20180100545**

(43) Date of publication of application:
**03.06.2020 Bulletin 2020/23**

(60) Divisional application:
**20210480.8**

(73) Proprietor: **Secondmind Limited**
**Cambridge, Cambridgeshire CB2 1LA (GB)**

(72) Inventors:
- **GRANT, James**
  **Cambridge, CB2 1LA (GB)**
- **BOUKOUVALAS, Alexis**
  **Cambridge, CB2 1LA (GB)**
- **LESLIE, David**
  **Cambridge, CB2 1LA (GB)**
- **MUNOZ DE COTE, Enrique**
  **Cambridge, CB2 1LA (GB)**
- **JOHN, Sebastian**
  **Cambridge, CB2 1LA (GB)**
- **VAKILI, Sattar**
  **Cambridge, CB2 1LA (GB)**

(74) Representative: **EIP**
**Fairfax House**
**15 Fulwood Place**
**London WC1V 6HU (GB)**

(56) References cited:
**US-B2- 10 037 041**

- **JAMES A GRANT ET AL: "Adaptive Policies for Perimeter Surveillance Problems", ARXIV.ORG, CORNELL UNIVERSITY LIBRARY, 201 OLIN LIBRARY CORNELL UNIVERSITY ITHACA, NY 14853, 4 October 2018 (2018-10-04), XP081057440,**
- **M P WAND: "Data-Based Choice of Histogram Bin Width", THE AMERICAN STATISTICIAN, vol. 51, no. 2, February 1997 (1997-02), pages 59-64, XP055624653,**
- **ANDREAS KRAUSE ET AL: "Near-Optimal Sensor Placements in Gaussian Processes: Theory, Efficient Algorithms and Empirical Studies", JOURNAL OF MACHINE LEARNING RESEARCH, MIT PRESS, CAMBRIDGE, MA, US, vol. 9, June 2008 (2008-06), pages 235-284, XP058246451, ISSN: 1532-4435**
- **ALAN JULIAN IZENMAN: "Review Papers: Recent Developments in Nonparametric Density Estimation", JOURNAL OF THE AMERICAN STATISTICAL ASSOCIATION., vol. 86, no. 413, March 1991 (1991-03), pages 205-224, XP055624589, US ISSN: 0162-1459, DOI: 10.1080/01621459.1991.10475021**
- **AFSHIN GHOLAMY ET AL: "What is the optimal bin size of a histogram: An informal description", INTERNATIONAL MATHEMATICAL FORUM, vol. 12, no. 15, December 2017 (2017-12), pages 731-736, XP055624649, DOI: 10.12988/imf.2017.7757**
- **RAJU MATTIKALLI ET AL: "Optimal Sensor Selection and Placement for Perimeter Defense", AUTOMATION SCIENCE AND ENGINEERING, 2007. CASE 2007. IEEE INTERNATIONA L CONFERENCE ON, IEEE, PI, September 2007 (2007-09), pages 911-918, XP031141659, ISBN: 978-1-4244-1153-5**

- **NOVELLA BARTOLINI ET AL: "Mobile Sensor Deployment in Unknown Fields", INFOCOM, 2010 PROCEEDINGS IEEE, IEEE, PISCATAWAY, NJ, USA, 14 March 2010 (2010-03-14), pages 1-5, XP031675072, ISBN: 978-1-4244-5836-3**

## Description

Technical Field

The present invention relates to a method and system for arranging sensor devices for detecting events within a domain

Background

It has been proposed to use automated sensor devices to gather data that is processed to identify the occurrence of events occurring in a variety of physical systems. For example, in surveillance operations a fleet of unmanned aerial vehicles (UAVs) may be used to deploy cameras to image a border or region to detect intrusions or other prohibited activities. In astronomy, automated telescopes may be used to detect cosmological events. Automated sensor devices may detect events automatically, or alternatively may stream data to a computer system arranged to detect events within the streamed data.

There is generally a cost associated with operating a sensor device. For example, there is a computational cost associated with processing data generated by a digital camera. In examples where a sensor device illuminates a region, for example using an infra-red source, there is an energy cost associated with illuminating the region. The cost of operation may increase with the number of deployed sensor devices. The physical capabilities of a sensor device may constrain the extent and/or shape of regions that the sensor device can be used to detect events in. In many applications, the cost of operating a sensor device depends on an extent of the region and/or the duration of time for which the sensor device is deployed. Accordingly, it may be impractical or impossible to allocate sensor devices to detect events within the entirety of a domain of interest.

For most applications, the rates at which events occur at different co-ordinates within a domain of interest is *a priori* unknown. Therefore, the rates at which events occur at different co-ordinates must be estimated on the basis of events detected by sensor devices. As more events are detected, the estimated rates will be updated, and therefore it will be desirable to allocate the sensor devices dynamically, to take advantage of the progressively improving rate estimates.

Dynamically allocating sensor devices to detect events within a domain leads to an exploration-exploitation dilemma. If the sensor devices are always allocated to subdomains where the most events are expected to occur, the sensor devices will not gather event data for other portions of the domain, and no insight will be gained into the rate of in events occurring in those portions. By contrast, if sensor devices are allocated to excessively large subdomains, or to subdomains that are chosen with too much variance, the cost of operating the sensor devices will be high for the number of events detected.

The article "Adaptive Policies for Perimeter Surveillance Problems" by J. A. Grant *et al* discusses a method of detecting intrusions at a perimeter, in which a decision-maker sequentially updates an allocation of searchers to the perimeter, whilst learning from observed data to make improved decisions over time.

The article "Data-Based Choice of Histogram Bin Width", by M. P. Wand *et al* discusses a method of estimating optimal bin widths for a histogram with a given sample size.

The article "Near-Optimal Sensor Placements in Gaussian Processes: Theory, Efficient Algorithms and Empirical Studies" discusses a method of finding a configuration of sensors which maximises mutual information between locations which are selected for sensor placement and locations which are not selected for sensor placement.

Summary

According to a first aspect of the present invention, there is provided a computer-implemented method for arranging one or more sensor devices for detecting events within a domain having one or more dimensions. The method includes iteratively: determining a plurality portions spanning the domain; estimating a normalised rate of events being detected in each portion; selecting, in dependence on the estimated normalised rates, one or more of the determined portions on the basis of an expected reward associated with allocating the one or more sensor devices to the selected one or more portions; arranging the one or more sensor devices to detect events in the selected one or more portions; and receiving event data from the one or more sensor devices, the event data being indicative of dimensional co-ordinates of events detected by the one or more sensor devices within the selected one or more portions. The expected reward depends on an expected rate of events being detected by the one or more sensor devices, penalised by a sensing cost associated with the one or more sensor devices. The number of determined portions increases with respect to the number of iterations in accordance with a predetermined relationship. Selecting the one or portions includes sequentially, for each of the one or more sensor devices: selecting, in dependence on the estimated normalised rates, a subdomain comprising one or more of the plurality of portions on the basis of an expected reward associated with allocating a single sensor device to the selected subdomain; and zeroing the estimated normalised rates for each portion in the selected subdomain. Selecting the subdomain includes initialising an intermediate subdomain comprising a plurality of portions, a subset of the plurality of portions being boundary portions associated with one or more boundaries of the intermediate subdomain, and iteratively: estimating a gradient, with respect to positions of the boundaries of the intermediate subdomain, of an expected reward associated with allocating a single sensor device to the intermediate subdomain; and modifying the positions of the boundaries of the intermediate subdomain on the basis of the estimated gradient, to increase the expected reward associated with allocating the single sensor device to the intermediate subdomain. The gradient at each iteration is estimated on the basis of a sum of the estimated normalised rates of events being detected in the boundary portions of the intermediate subdomain

By increasing the number of determines portions in accordance with a predetermined relationship, the provided method automatically provides a solution to the exploration-exploitation dilemma inherent to the problem of arranging sensor devices.

Further features and advantages of the invention will become apparent from the following description of preferred embodiments of the invention, given by way of example only, which is made with reference to the accompanying drawings.

Brief Description of the Drawings

Figure 1 shows an example of two UAVs being arranged to detect events in a one-dimensional spatial domain.
Figure 2 shows an example of two UAVs being arranged to detect events in a two-dimensional spatial domain.
Figure 3 shows an example of a sensor device being arranged to detect events in a temporal domain.
Figure 4 is a flow diagram representing an example of a method of arranging sensor devices for detecting events in a domain.
Figure 5 shows an example of portions spanning a one-dimensional spatial domain.
Figure 6 shows plots of Bayesian regret against number of iterations for two examples of the present invention.
Figure 7 shows results of allocating sensor devices in accordance with two examples of the present invention.
Figure 8 is a flow diagram representing an example of a method for estimating a normalised rate of events being detected within a portion of a domain.
Figure 9 is a flow diagram representing a further example of a method for estimating a normalised rate of events being detected within a portion of a domain.
Figure 10 is a flow diagram representing an example of a method for determining a union of subdomains to which sensors are to be allocated.
Figure 11 shows an example of a union of subdomains being selected from a one-dimensional domain in accordance with the method of Figure 10.
Figure 12 is a flow diagram representing an example of a method for determining a union of subdomains to which sensors are to be allocated.
Figure 13 is a flow diagram representing an example of a method for determining a subdomain on the basis of a set of sampled normalised rates.
Figure 14 shows an example of a subdomain being selected from a two-dimensional domain in accordance with the method of Figure 13.
Figure 15 shows results of allocating sensor devices in accordance with two further examples of the present invention.
Figure 16 shows a computer system arranged to perform a method in accordance with the present invention.

Detailed Description

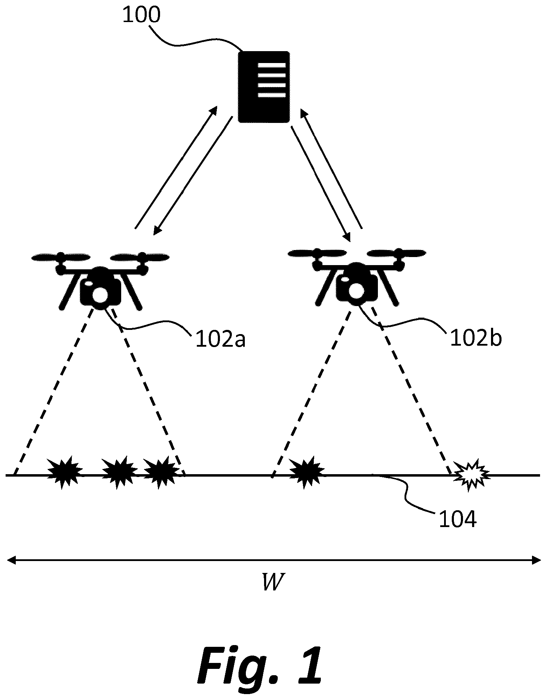

Figure 1 shows an example in which a computer system 100 is communicatively coupled to two UAVs 102a and 102b, referred to collectively as UAVs 102. In this example, the UAVs 102 communicate with the computer system 100 over a wireless network, for example a Long Term Evolution (LTE) wireless network. In other examples, a UAV may communicate with a computer system using alternative means, for example over a Wi-Fi network or using Bluetooth or other radio signals. The UAVs 102 are examples of sensor devices, and in this example are arranged to detect events within a domain 104 having a single spatial dimension. The extent of the domain 104 is given by the width $W$. The UAVs 102 are equipped with global positioning system (GPS), and accordingly are able to associate dimensional co-ordinates with the detected events. Each of the UAVs 102 includes an image sensor device and is arranged to detect events within a continuous subdomain of the domain 104 by processing image data captured by the image sensor device. According to the present invention, the computer device 100 dynamically allocates the UAVs 102 in dependence on event data corresponding to events that have been detected within the domain 104. There is a sensing cost associated with operating the UAVs 102, which in the present example is proportional to the width or extent of the subdomains to which the UAVs 102 are allocated. The extent of the subdomains may be altered during the dynamic allocation of the UAVs 102. In this present example, the domain 104 is a border of a security-controlled facility, and the UAVs 102 are deployed at night to automatically detect intrusion events along the border, in which an unauthorised person attempts to enter the security-controlled facility. In the present example, the allocated subdomains are updated one or more times each night in accordance with the methods described hereafter.

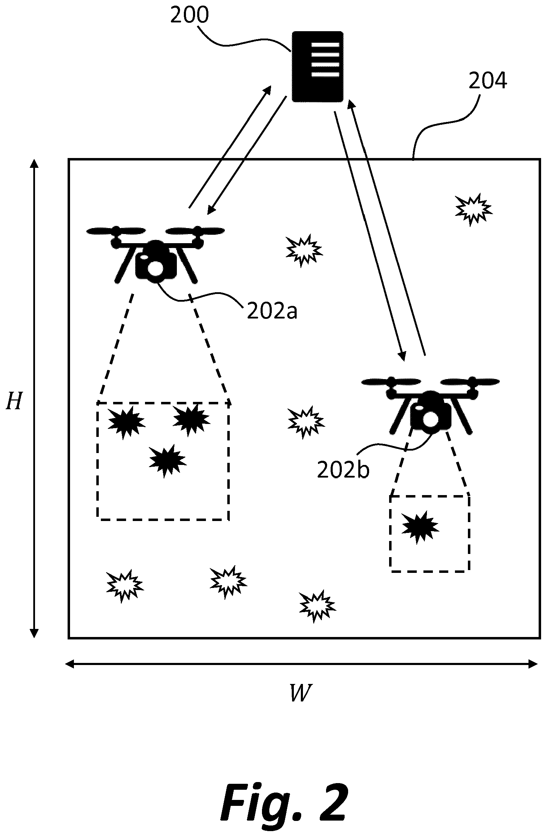

Figure 2 shows an example in which a computer system 200 is communicatively coupled to two UAVs 202a and 202b, referred to collectively as UAVs 202. In this example, the UAVs 202 are arranged to detect events in a domain 204 having two spatial dimensions. The extent of the domain 204 is given by the area $H \times W$ of the domain. Each of the UAVs 202 is arranged to detect events within a square subdomain of the domain 204. The computer device 200 dynamically allocates the UAVs 202 in dependence on event data corresponding to events that have been detected within the domain 204. There is a sensing cost associated with operating the UAVs 202, which in the present example is proportional to the area or extent of the subdomains to which the UAVs 202 are allocated. The extent of the subdomains may be altered during the dynamic allocation of the UAVs 202. In this present example, the domain 204 is a region of a nature reserve, and the UAVs 202 are deployed at night to detect poaching events within the region. In the present example, the allocated subdomains are updated one or more times each night in accordance with the methods described hereafter.

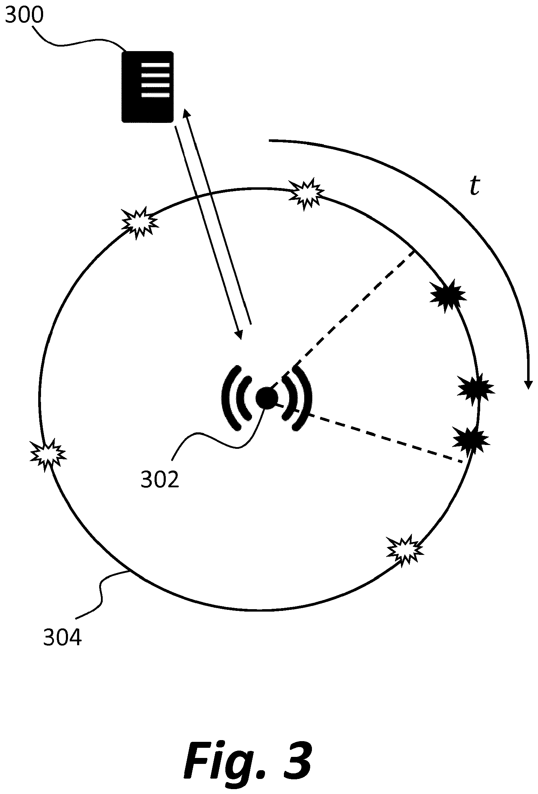

Figure 3 shows an example in which a computer system 300 is communicatively coupled to a sensor device 302 which is used to detect events occurring within a domain 304 having a single periodic temporal dimension. A single period of the domain 304 in this example corresponds to a single day, and the rate at which events are expected to occur depends on the time of day. In other examples, a single period of a periodic temporal domain may correspond to a year, and a rate at which events are expected to occur may depend on a time of year. In the present example the sensor device 302 is used to detect events occurring at a single location, but only at certain times of day.

The computer device 300 dynamically allocates the sensor device 302 to subdomains of the temporal domain 304 in dependence on event data corresponding to events that have been detected within previous periods of the domain 304. There is a sensing cost associated with operating the sensor device 302, which in the present example is proportional to the duration or extent of the subdomains to which the sensor device 302 is allocated. The extent of the subdomains may be altered during the dynamic allocation of the sensor device 302.

The present invention provides a computer-implemented method of arranging one or more sensor devices for detecting events within a domain. Within the meaning of the present disclosure, a sensor device is an automated agent that is capable of observing discrete events. Sensor devices may include one or more sensors, for example image sensing devices such as cameras, audio sensing devices such as microphones, and/or devices for detecting faults or other events within a communications network or within electrical circuitry. A sensing cost is associated with deploying and operating the sensor devices, resulting in a need to balance the desire to detect as many events as possible with the desire to minimise the sensing cost associated with operating the sensor devices. More precisely, a computer system is set the task of maximising a cumulative expected reward, where the reward is given by the rate at which events are detected within the domain *D,* penalised by the sensing cost. The method proceeds under the assumption that the events are distributed according to a non-homogeneous Poisson process with a rate function A: $D \to \mathbb{R}_+$ that varies within the domain *D.* According to the present method, at each of a sequence of iterations *t* = 1, 2, ..., the computer system sends a control signal to each of the one or more sensor devices, causing the one or more sensor devices to be arranged to detect events in a union $A_t$ of continuous subdomains of the domain *D.* Each iteration is associated with an interval of fixed duration, such that the devices are arranged to detect events in each union $A_t$ for an equal duration.

In some examples (such as the examples of Figures 1 and 2), each sensor device is capable of detecting events in a single continuous subdomain. In other examples (such as the example of Figure 3), each sensor device is capable of detecting events in more than one continuous subdomains. In any case, the method proceeds on the basis that the union $A_t$ contains at most *U* continuous subdomains, where *U* is a predetermined integer. In the examples of Figures 1 and 2, *U* corresponds to the number of sensor devices. It is assumed that the sensor devices will detect any event that occurs in the union $A_t$. The expected rate at which events will be detected by the sensor devices between iterations *t* and *t* + 1 is given by Equation (1):

$$\mathbb{E}(\text{rate of detection}) = \int_{A_t} \lambda(x)\, \mathrm{d}x. \tag{1}$$

The expected reward received in the interval associated with iteration *t.* is given by the expected rate of events being detected, penalised by the sensing cost. In an example, the sensing cost depends on the extent of the union $A_t$

of subdomains. In a specific example, the sensing cost is proportional to extent of the union $A_t$, and the expected reward is given by Equation (2):

$$r(A_t) = \mathbb{E}(\text{rate of detection}) - \int_{A_t} C \, dx = \int_{A_t} (\lambda(x) - C) \, dx, \qquad (2)$$

where $C$ is the sensing cost per unit extent of the union $A_t$. In other examples, the sensing cost may depend on the extent of the union $A_t$ according to an alternative predetermined relationship, for example an exponential relationship.

The rate function $\lambda(x)$ is unknown, and in the present method Bayesian inference is used to estimate $\lambda(x)$ at each iteration. The efficacy of the method may be characterised by the Bayesian regret, which is a measurement of how much the cumulative expected reward differs from the optimal cumulative expected reward. The Bayesian regret for the first $T$ iterations is given by Equation (3):

$$BReg(T) = \sum_{t=1}^{T} \mathbb{E}(r(A^*) - r(A_t)) \qquad (3)$$

where $A^*$ is the union of subdomains that maximises the expected reward of Equation (2), and where the expectation in Equation (3) is taken with respect to a prior probability distribution over the rate function $\lambda(x)$, as will be described in more detail hereafter. The objective of the present method is to minimise the Bayesian regret of Equation (3).

The task described above leads to an exploration-exploitation dilemma, in which the need to explore the domain $D$ in order to discover subdomains with high rates of events occurring must be balanced against the need to deploy sensors to detect events in subdomains that are already believed to have high rates of events occurring.

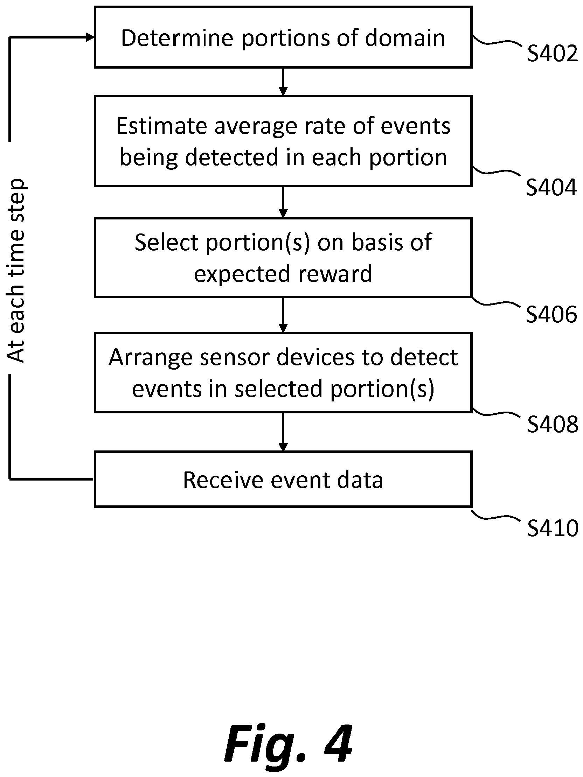

Figure 4 shows a method implemented by a computer system to arrange one or more sensor devices for detecting events in a domain in accordance with the present invention. At each iteration $t$, the computer device determines, at S402, one or more portions of the domain $D$. The portions are non-overlapping and span the entire domain $D$. In some examples, the determined portions have equal extents. For example, in a domain having one spatial dimension, the portions may be spatial intervals of equal length. In a domain having two spatial dimensions, the portions may be squares of rectangles of equal extent and shape. In a domain having a temporal dimension, the portions may be temporal intervals of equal duration. In other examples, the portions determined at a given iteration may have differing extents. As will be explained in more detail hereafter, the number of portions determined by the computer system will be increase as the number of iterations increases. At iteration $t$, the number of portions determined by the computer system is given by $K_t$, and the portions are labelled $B_{k,t}$ for $k = 1, ..., K_t$. As will be explained in more detail hereafter, the determined portions are used for binning of event data, such that events detected within each portion are effectively replaced by values representative of the portion as a whole.

The computer device estimates, at S404, a normalised rate $\psi_{k,t}$ of events of being detected in each portion $B_{k,t}$. The normalised rate is defined by Equation (4):

$$\psi_{k,t} = \frac{1}{|B_{k,t}|} \int_{B_{k,t}} \lambda(x) \, dx, \qquad (4)$$

where $|B_{k,t}|$ denotes the extent of the portion $B_{k,t}$. In other words, the normalised rate is given by the integral of the rate function over the portion, divided by the extent of the portion. The normalised rate is therefore equivalent to a mean value of the rate function within the portion.

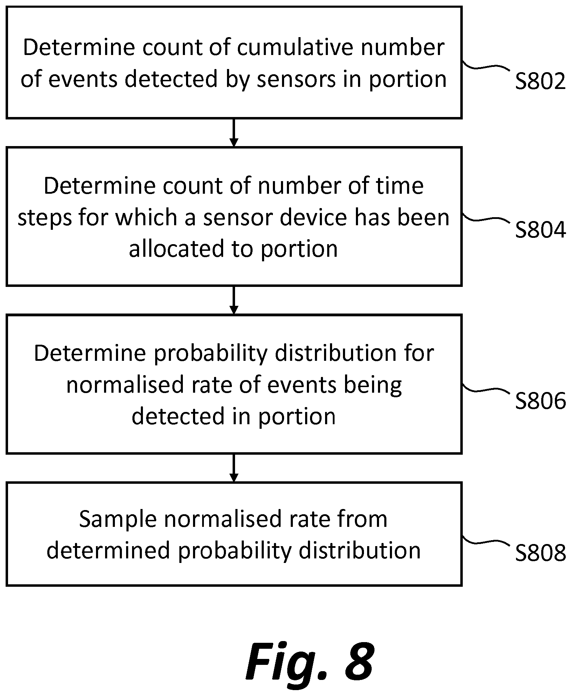

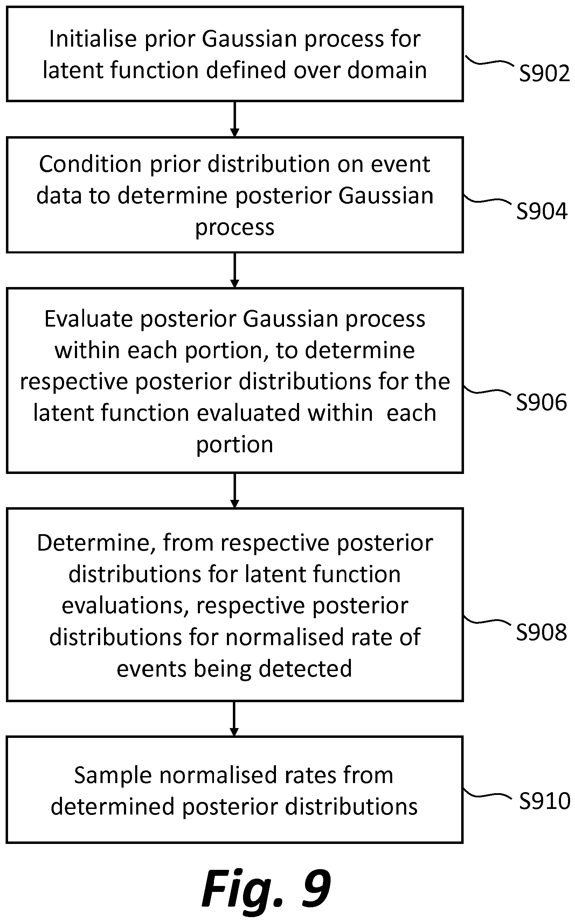

Estimating the normalised rate $\psi_{k,t}$ involves processing event data corresponding to events previously detected by the sensor devices. As will be explained in more detail hereafter, for each interval associated with an iteration, the sensor devices transmits event data to the computer device, indicative of events detected by the sensor devices, including the dimensional co-ordinates of the detected events. The computer device stores the event data cumulatively, and at each iteration uses the stored event data to estimate $\psi_{k,t}$. Examples of methods for estimating the normalised rate $\psi_{k,t}$ are described in more detail below, with reference to Figures 8 and 9.

The computer system selects, at S406, in dependence on the estimated normalised rates $\psi_{k,t}$, a union $A_t$ of

continuous subdomains consisting of a subset of the portions $B_{k,t}$. The subset of portions is selected from all possible subsets of portions (given the constraint that the union $A_t$ must contain at most $U$ continuous subdomains, and that the continuous subdomains are permitted by any physical constraints imposed by the sensor devices) on the basis of the expected reward $r(A_t)$ associated with allocating the one or more sensor to the union $A_t$. More precisely, the computer system selects the union $A_t$ as a solution to the following optimisation problem:

- maximise the estimated reward associated with allocating the sensor devices to $U$ continuous subdomains of the domain $D$, such that
- each of the continuous subdomains consists of a subset of the determined portions $B_{k,t}$, and is permitted by the physical constraints imposed by the sensor device, and
- at most one sensor device is allocated to each of the determined portions $B_{k,t}$, where
- the estimated reward is determined by assuming that the normalised rate within each portion $B_{k,t}$ is given by the corresponding normalised rate estimated at S404.

In an example, which is not an embodiment of the invention, the computer system precomputes, for each permitted continuous subdomain, an estimated reward associated with allocating a single sensor device to the subdomain, which converts the problem outlined above to an integer program that can be solved using a standard linear program solver.

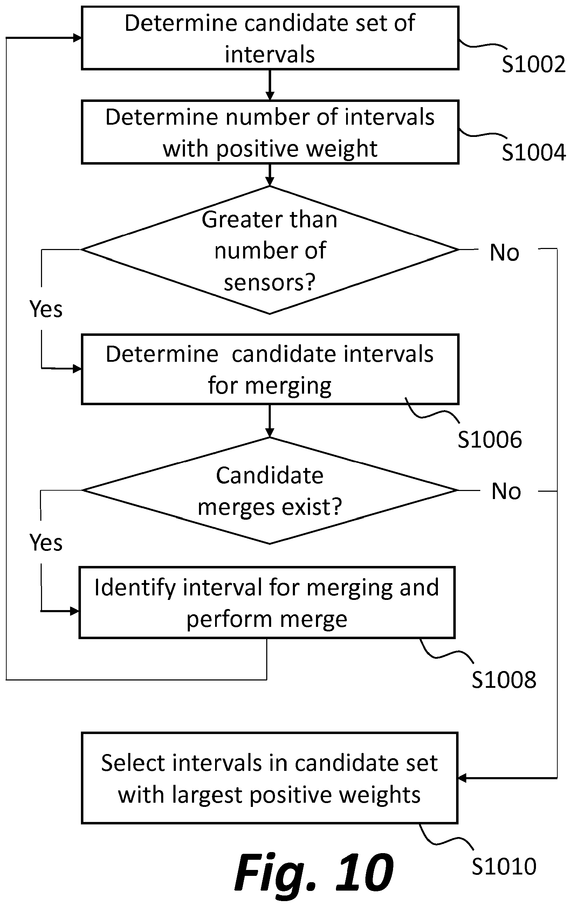

It will be appreciated that other methods may be used to select the union $A_t$ of subdomains (for example, by solving the optimisation problem above) without departing from the scope of the invention. Alternative methods are described hereinafter with reference to Figures 10-14.

The computer system arranges, at S408, the one or more sensor devices to detect events in the selected union $A_t$ of subdomains. Arranging the one or more sensor devices generally involves sending control signals to the sensor devices. In the case of a domain having one or more spatial dimensions, the control signals may cause the sensor devices to move to appropriate locations within the domain, or otherwise to configure one or more associated sensors to detect events within the selected union $A_t$. In the case of a temporal domain, the control signals may cause a sensor device to activate one or more sensors for selected timeframes.

Having been arranged as described above, the one or more sensor devices generate event data indicative of events detected within the union $A_t$. The event data includes dimensional co-ordinates of the detected events in the domain $D$. In the case of a spatial dimension, a dimensional co-ordinate corresponds to a location. In the case of a temporal domain, a temporal co-ordinate corresponds to a time. The computer device receives, at S410, the event data from the one or more sensor devices. At the following iteration, the received event data will be taken into account when estimating the normalised rates at S404.

In the present method, the number of portions determined at S402 gradually increases with respect to the number of iterations in accordance with a predetermined relation. In other words, the domain $D$ is discretised progressively more finely as the computer device receives progressively more event data. Increasing the number of portions may involve, at certain iterations, dividing previously-determined portions into a predetermined number of sub-portions. By gradually increasing the number of portions, the method automatically provides a solution to the exploration-exploitation dilemma discussed above. Initially, when the computer system has received only a small amount of event data, the method favours exploration as the sensor devices are allocated to large subdomains. As progressively more event data is received, the determined portions become smaller, resulting in progressively more intricate selection of subdomains and a progressive shift towards exploitation. Using the present method, there is an inevitable contribution to the Bayesian regret due to the fact that the domain is discretised into portions at each iteration, because the optimal union $A^*$ of subdomains is not likely to correspond exactly to a subset of the selected portions. By discretising the domain progressively more finely, the inevitable contribution due to discretisation eventually becomes insignificant. Furthermore, the estimated normalised rate of events being detected in each portion is expected to eventually converge to the true rate function $\lambda(x)$ evaluated within the portion. In some examples, the method includes determining, using predetermined convergence criteria, that the estimated normalised rate of events being detected in each portion has converged, in which case no further re-arranging of the sensing devices is performed.

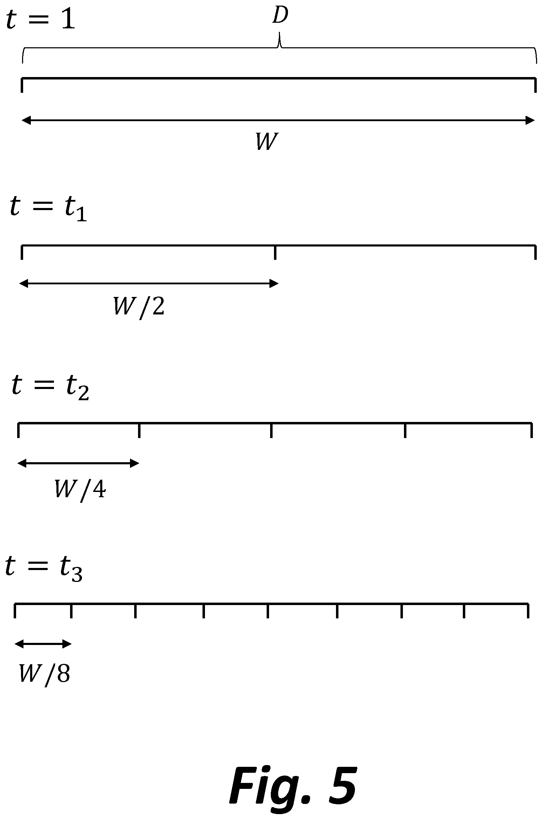

Figure 5 shows an example a domain D having a single spatial dimension and an extent of $W$. In this example, at the initial iteration $t = 1$, a single portion of the domain $D$ is determined, spanning the entire extent $W$ of the domain. In other examples, more than one portion may be determined at the initial iteration. At later iterations $t_1, t_2, t_3, ...$, the domain is divided into progressively more portions of equal extent. In the present example, the number of portions is doubled at each of the iterations $t_1, t_2, t_3, ....$ In some examples, the rate at which the number of determined portions increases is constant, or in other words the determined number of portions increases in proportion to the number of iterations, such that $K_t \propto t$. In the example of Figure 5, this is achieved if the iterations satisfy the iterative relationship $t_{i+1} = 2t_i$ for $i = 1, 2, 3, ...$ In other examples, the rate at which the determined number of portions increases may not be constant, and the determined number of portions may instead increase with the respect to the number of iterations in accordance with a nonlinear relationship. For example, the rate at which the determined number of portions increases may decrease with time, resulting in a sublinear relationship. An example of a sublinear relation is one in which the number of determined portions increases in proportion to a predetermined power of the number of iterations, the predetermined power being greater than zero and less than one, such that $K_t \propto t^\gamma$, where $0 < y < 1$. In the example of Figure 5, this is achieved if the iterations satisfy the iterative relationship $t_{i+1}^\gamma = 2t_i^\gamma$ for $i$ = 1, 2, 3, ...

Increasing the determined number of portions in accordance a sublinear relationship is observed to result in improved performance of the method in comparison with increasing the determined number of portions in proportion to the number of iterations. The reason for this is that when the determined number of portions is increased in proportion to the number of iterations, after a few re-discretisations of the domain, most of the determined portions are associated with very little event data, and therefore the estimate of the normalised rate depends strongly on prior assumptions. Improved performance is observed when $K_t \propto t^\gamma$, where $0 < y < 1$, for example $0.2 < y < 0.5$, $0.3 < \gamma < 0.4$, or $\gamma \approx 1/3$. It can be shown that for a specific method of estimating the normalised rates being detected, described hereafter with reference to Figure 8, the choice of $y = 1/3$ results in a Bayesian regret that is asymptotically bounded at $O(T^{2/3} \log^{1/2} T)$ as $T \rightarrow \infty$.

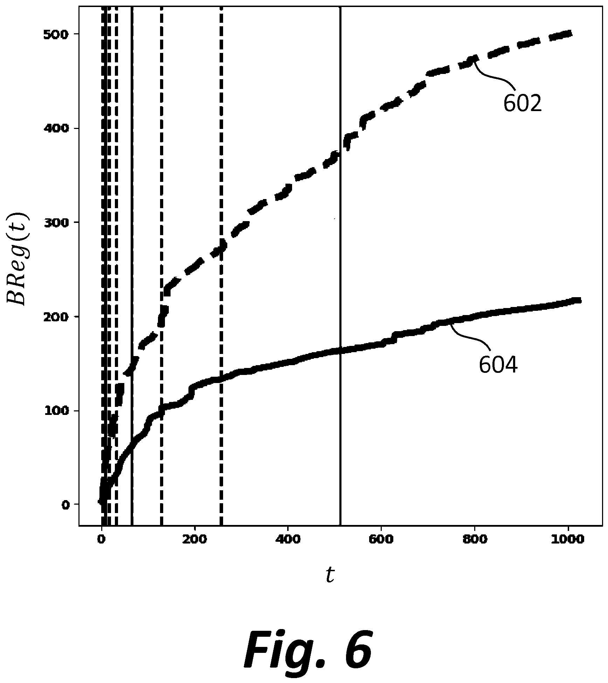

Figure 6 demonstrates the effect of the rate of re-discretisation of the domain $D$ in a simulation corresponding to the example of Figure 5. For the simulation, events are generated according to a non-homogeneous Poisson process with a predetermined rate function $\lambda(x)$, and a single sensor device is arranged to detect the events, using the method described above. The domain is re-discretised according to the relationship $K_t \propto t^\gamma$, where $\gamma = 1$ for the dashed curve 602 and $y = 1/3$ for the solid curve 604. The solid vertical lines correspond to iterations at which the domain is re-discretised for both the $y = 1$ case and the $y = 1/3$ case, and the dashed vertical lines correspond to iterations at which the domain is re-discretised only for the $y = 1$ case. For the $y = 1$ case, the domain is discretised at $t$ = 1, 2, 4, 8, ..., and the corresponding numbers of portions are given by $K_t$ = 2, 4, 8, 16, .... For the $y = 1/3$ case, the domain is discretised at $t$ = 1, 8, 64, 512, ..., and the corresponding numbers of portions are given by $K_t$ = 4, 8, 16, 32, .... It is observed that the Bayesian regret is consistently lower for the sublinear $y = 1/3$ case than for the linear $y = 1$ case.

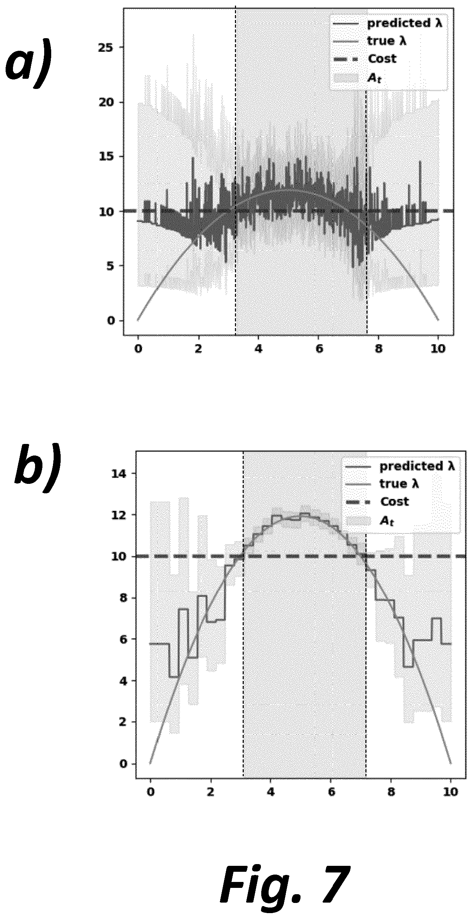

Figure 7 shows the state of the simulation described above with reference to Figure 6 at iteration $t$ = 1024. Figure 7a corresponds to the linear case with $y = 1$, and Figure 7b corresponds to the sublinear case with $y = 1/3$. In each case, the smooth concave curve shows the predetermined rate function $\lambda(x)$, and the horizontal dashed line shows the cost $C$. The maximum reward $r(A_t)$ is achieved by arranging the sensor device to detect events in the subdomain for which $\lambda(x) > C$, which in this case corresponds to the subdomain $A^* = [3,7]$. The region between the dashed vertical lines in each case corresponds to the subdomain $A_t$ selected according to the method described above. Figure 7 also shows, for each case, the predicted rate function, which is an expectation value for estimations of $\psi_{k,t}$ in each portion. It is observed that the predicted rate function in Figure 7b, corresponding to the sublinear case, closely approximates the actual rate function $\lambda(x)$ in each portion, whereas the predicted rate function in Figure 7a, corresponding to the linear case, differs significantly from the actual rate function $\lambda(x)$. As a result, the subdomain selected in Figure 7b is closer than the subdomain selected in Figure 7a to the optimal subdomain $A^*$. Accordingly, the Bayesian regret is lower for the sublinear case, even though the discretisation of the domain is considerable coarser at the iteration shown.

Figure 8 shows an example of a method performed by a computer system for estimating a normalised rate of events being detected in a portion $B_{k,t}$ of a domain $D$. In accordance with the method of Figure 4, the method of Figure 8 is performed at S404 for each iteration $t$. For each iteration $t > 1$, the method takes account of event data received before that iteration.

The computer system determines, at S802, a count $H_{k,t}$ of the cumulative number of events that have been detected in the portion $B_{k,t}$ before the iteration $t$. The count $H_{k,t}$ at iteration $t$ = 1 may be zero for $k$ = 1, ..., $K_1$ because the computer device has not yet received any event data. As mentioned above, for each interval between iterations, the computer device receives event data indicative of dimensional co-ordinates of detected events. The computer device stores the event data, and uses the stored event data to determine the count $H_{k,t}$ at each iteration $t > 1$.

The computer system determines, at S804, a count $N_{k,t}$ of the number of iterations for which a sensor device has been allocated to the portion $B_{k,t}$ before iteration $t$. The count $N_{k,t}$ at iteration $t$ = 1 may be zero for $k$ = 1, ..., $K_t$ because the sensor devices have not been allocated to any portions before the iteration $t$ = 1.

The computer system determines, at S806, a probability distribution for the normalised rate $\psi_{k,t}$ of events being detected in the portion $B_{k,t}$, using the count $H_{k,t}$ and the count $N_{k,t}$. In a specific example, the probability distribution is a gamma distribution, as shown in Equation (5):

$$\psi_{k,t} \sim \Gamma\big(\alpha + H_{k,t}, \beta + N_{k,t}|B_{k,t}|\big), \qquad\qquad (5)$$

where $\alpha,\beta$ are prior parameters of the Gamma distribution, and $|B_{k,t}|$ is the extent of the portion $B_{k,t}$ (for example, in the case of a one-dimensional domain divided into $K_t$ equal portions, the extent of a portion is given by $|B_{k,t}| = 1/K_t$). The prior parameters are chosen in dependence on a prior belief about the number of events that will be detected in each region. Provided the prior parameters $\alpha,\beta$ are not chosen to be too large, the mean of the probability distribution of Equation (5) will tend to $H_{k,t}/N_{k,t}$, which is the empirical mean rate of events being detected in the portion $B_{k,t}$. It will be appreciated that other forms of probability distribution could be used instead of the Gamma distribution shown in Equation (5), for example a normal distribution with mean and variance that depend on the counts $N_{k,t}$ and $H_{k,t}$. In another example, the probability distribution is a truncated gamma distribution, which has a density proportional to the gamma distribution of Equation (5), but with a truncated support $[0,\lambda_{\max}]$, where $\lambda_{\max}$ is an additional prior parameter representing an upper bound on the rate function. It is recommended that $\lambda_{\max}$ is chosen conservatively (i.e. chosen to be significantly larger than the actual highest expected rate), in which case the performance of the method is equivalent to that resulting from the standard gamma function.

The computer system samples, at S808, a normalised rate $\psi_{k,t}$ in accordance with the probability distribution determined at S806. The estimated normalised rate is then given by the sampled normalised rate. In other words, the estimated normalised rate is given by a random sample drawn from the probability distribution determined at S806.

Figure 9 shows a second example of a method performed by a computer system for estimating a normalised rate of events being detected in a portion $B_{k,t}$ of a domain $D$. The computer system initialises, at S902, a prior Gaussian process for a latent function $f(x)$ defined over the entire domain $D$, such that $f(x) \sim \mathrm{GP}(0, k(x,x'))$ for a predetermined kernel $k(x,x')$. The unknown rate function $\lambda(x)$ is related to the latent function $f(x)$ in accordance with a predetermined functional relationship. In one example, the rate function is given by the natural exponent of the latent function, such that $\lambda(x) = \exp(f(x))$. In another example, the rate function is given by a quadratic function of the latent function, such that $\lambda(x) = (f(x) + \delta)^2$, where $\delta$ is a parameter. The kernel $k(x,x')$ may be, for example, a squared exponential kernel, a Matérn kernel, a periodic kernel, or any other suitable form of kernel. In a specific example, the kernel is a Matern kernel of half-integer order, which leads to attractive implementation properties, as will be explained in more detail hereafter. The prior Gaussian process may depend on hyperparameters of the kernel $k(x,x')$, in which case initialising the prior Gaussian process includes initialising the hyperparameters of the kernel $k(x,x')$.

The computer system conditions, at S904, the prior Gaussian process for the latent function $f(x)$ on event data indicative of locations of events detected by the one or more sensor devices, to determine a posterior Gaussian process.

The event data includes a set $X = \{x_n\}_{n=1}^{N}$ of $N$ points, each point corresponding to dimensional co-ordinates of an event detected within the domain $D$. Conditioning the prior Gaussian process on the event data results in a posterior Gaussian process for the latent function $f(x)$ such that $f(x) \mid X \sim \mathrm{GP}(m_{\mathrm{p}}(x), k_p(x, x'))$, where $m_{\mathrm{p}}$, $k_{\mathrm{p}}$ denote a posterior mean function and a posterior kernel respectively. Conditioning the prior Gaussian process on the event data involves application of Bayes theorem in the form of Equation (6):

$$p(\lambda(x)|X) = \frac{p(X|\lambda(x))p(\lambda(x))}{p(X)}, \qquad (6)$$

where:

- $p(\lambda(x)|X)$ is the posterior distribution of the rate function $\lambda(x)$;
- $p(x|\lambda(x))$ is a probability distribution of the data $X$ conditioned on the function $\lambda(x)$, referred to as the likelihood;
- $p(\lambda(x))$ is a prior probability distribution of function $\lambda(x)$; and
- $p(X)$ is the marginal likelihood, which is calculated by marginalising the likelihood over the rate function $\lambda(x)$, such that $p(X) = \int p(X|\lambda(x))p(\lambda(x))\mathrm{d}\lambda$.

In the present example, the likelihood is given by Equation (7):

$$p(X|\lambda(x)) = \exp\left(-\int_{\tau} \lambda(x)\mathrm{d}x\right)\prod_{n=1}^{N} \lambda(x_n). \qquad (7)$$

In principle, conditioning the prior Gaussian process on the event data involves substituting $\lambda(x)$ for $f(x)$ in Equation (6) using the predetermined functional relationship between $\lambda(x)$ and $f(x)$, resulting in a posterior distribution $p(f(x)|X)$ for the latent function $f(x)$. In practice, the integral in the denominator of Equation (6) is intractable, so an alternative method must be used to condition the prior Gaussian process on the event data. In a specific example, conditioning the prior Gaussian process on the event data is achieved by first conditioning the prior Gaussian process on a set $U = \{u_m\}_{m=1}^M$ of M inducing variables, where $M < N$. The inducing variables correspond to outputs of the latent function $f(x)$, and correspond to a set of $M$ inducing inputs. In a specific example, the inducing inputs are given by components $\phi_m(x)$ of a truncated Fourier basis spanning the domain $D$, and the inducing variables are given by the Reproducing Kernel Hilbert Space (RKHS) inner product of the latent function $f(x)$ with the components $\phi_m(x)$ of the truncated Fourier basis, i.e. $u_m = \langle\phi_m, f(x)\rangle_H$. The inducing variables $U$ are distributed according to a variational distribution $q(U)$. In an example, the variational distribution is a multivariate normal distribution such that $q(U) = \mathcal{N}(U|m, \Sigma)$, where the mean $m$ and the variance $\Sigma$ of the multivariate normal distribution are treated as variational parameters. Conditioning the prior Gaussian process on the inducing variables results in an intermediate Gaussian process given by Equation (8):

$$f(x)|U \sim \mathrm{GP}\Big(k_u(x)^\mathrm{T}K_{uu}^{-1}U, k(x, x') - k_u(x)^\mathrm{T}K_{uu}^{-1}k_u(x')\Big), \qquad (8)$$

where the vector function $k_u(x)$ has components given by the covariance of the inducing variables $u_m$ with latent function evaluations $f(x)$ under the kernel $k$, such that $k_u(x)[m] = \mathrm{cov}(u_m, f(x))$. The matrix $K_{uu}$ is defined as the covariance between the inducing variables under the kernel $k$, such that $K_{uu}[m, m'] = cov(u_m, u'_m)$. Marginalising the intermediate distribution of Equation (8) over the variational distribution $q(U)$ results in a variational Gaussian process $q(f(x))$ for the latent function $f(x)$ given by Equation (9):

$$q\big(f(x)\big) = \int q(U)q(f(x)|U)\mathrm{d}U$$

$$= \mathrm{GP}\big(k_u(x)^T K_{uu}^{-1}m, k(x, x') + k_u(x)^T(K_{uu}^{-1}\Sigma K_{uu}^{-1} - K_{uu}^{-1})k_u(x')\big). \quad (9)$$

Conditioning the prior Gaussian process on the event data finally involves optimising the parameters of the variational Gaussian process, including the variational parameters $(m, \Sigma)$ and the hyperparameters of the kernel $k$, such that the variational Gaussian process for the latent function $f(x)$ fits the event data as closely as possible. In the example that the rate function is given by a quadratic function of the latent function, the parameter $\delta$ may also be optimised. The posterior Gaussian process $p(f(x)|X)$ is determined as the optimised variational Gaussian process.

In a specific implementation, referred to as variational Bayes, the parameters of the variational Gaussian process are optimised using a gradient-based optimisation method such that the Kuller-Leibler (KL) divergence between the Gaussian process $q(f(x))$ and the exact posterior $p(f(x)|X)$ is minimised, or equivalently such that a variational lower bound on the marginal likelihood $p(X)$ is maximised. In an example where the inducing inputs are given by components of a truncated Fourier basis, and where the kernel $k$ is given by a Matérn kernel of half-integer order, the variational lower bound is tractable using standard results. In other examples, alternative methods may be used for optimising the parameters of the variational Gaussian process, for example expectation propagation, Laplace-based methods, or Renyi divergence minimisation

The computer system evaluates, at S906, the posterior Gaussian process $p(f(x)|X)$ within each of the determined portions $B_{k,t}$, to determine a respective posterior distribution for the latent function $f(x)$ evaluated within each of the determined portions. In one example, the computer system evaluates the posterior Gaussian process at the midpoint $x_{k,t}$ of each of the determined portions $B_{k,t}$ to determine a posterior distribution $p(f(x_{k,t})|X)$ for the latent function evaluated at the midpoints. In other examples, the computer may evaluate the latent function at alternative locations within the determined portions.

The computer system determines, at S908, respective posterior probability distributions $p(\psi_{k,t}|X) = p(\lambda(x_{k,t})|X)$ for the normalised rate of events being detected in each of the determined portions $B_{k,t}$. The respective posterior distribution $p(\psi_{k,t}|X)$ is determined from the posterior distribution for the latent function $f(x)$ evaluated within each of the determined portions using the predetermined functional relationship between the rate function $\lambda(x)$ and the latent function $f(x)$.

The computer system samples, at S910, normalised rates $\psi_{k,t}$ in accordance with the posterior probability distributions determined at S908. The estimated normalised rate is then given by the sampled normalised rate. In other words, the estimated normalised rate is given by a random sample drawn from the probability distribution determined at S908.

The method of Figure 9 differs from the method of Figure 8 in that the normalised rates of events being detected in the individual portions are correlated due to the rate function $\lambda(x)$ being treated as continuous and smooth within the domain D. By contrast, in the method of Figure 8, the normalised rates are treated as being mutually independent. Treating the rate function $\lambda(x)$ as continuous and smooth may be appropriate for certain applications, and inappropriate for other applications. Accordingly, the methods of Figures 8 and 9 may each be more effective for certain applications. The method of Figure 9 is typically more computationally-expensive than the method of Figure 8. In particular, the step of conditioning the prior Gaussian process in Figure 9 requires significant computational resources. The method of Figure 8 may therefore be more appropriate when computational resources are scarce, for example in cases where the method is performed by a portable computer system such as a mobile phone or a laptop computer.

The methods of Figures 8 and 9 are both based on sampling approaches, where each estimated normalised rate of events being detected in a portion is given by a sample from a determined probability distribution. In other examples, alternative methods may be used for estimating the normalised rate. For example, in an $\varepsilon$-greedy approach, the estimated normalised rate is given by the mean rate $H_{k,t}/N_{k,t}$ with probability $p = 1 - \varepsilon$, and the estimated normalised rate is sampled from a determined probability distribution with $p = \varepsilon$, where $\varepsilon$ is a predetermined small parameter such that $0 < \varepsilon << 1$. In another example, the estimated rate may be determined on the basis of an upper confidence bound on the rate of events being detected. It is noted that a greedy approach, in which the estimated normalised rate is always given by the mean value $H_{k,t}/N_{k,t}$, always favours exploitation over exploration, and accordingly does not lead to good performance of the method. By contrast, the sampling approaches of Figures 8 and 9 balance exploration against exploitation, resulting in improved performance of the method, as measured by the Bayesian regret.

The integer program implementation described above for selecting the union $A_t$ of subdomains, given the estimated normalised rates $\psi_{k,t}$, is guaranteed to return an optimal solution to the optimisation problem posed in bullet points. However, the computational complexity of the integer program scales exponentially with the number $K_t$ of portions determined at time step $t$. The integer program approach may therefore become prohibitively expensive in terms of time and/or computational resources (for example, memory or processing power) in cases where a large number of portions is determined, which is typically the case when the method of Figure 4 is performed over a large number of time steps. In order for the present invention to be practicable in such cases, alternative methods may be implemented for selecting the union $A_t$ at each time step. In an example, which is not an embodiment of the invention and which applies to the case of a one-dimensional domain D, the optimisation problem described above may be solved using a novel iterative merging method, as described hereafter.

For a one-dimensional domain, the union $A_t$ selected at time step $t$ consists of $U$ disjoint intervals denoted $I_u$ for $u = 1, ..., U$. The weight $w(I_u)$ of an interval $I_u$ is defined by Equation (5):

$$w(I_u) = \int_{I_u} (\psi(x) - C)\, \mathrm{d}x, \qquad (5)$$

where $\psi(x)$ is a piecewise constant function given by $\psi(x) = \psi_{k,t}$ for $x \in B_{k,t}$. A solution to the optimisation problem is given by a union of intervals for which the sum of weights is maximised, as shown by Equation (6):

$$A_t = \underset{\{I_u\}_{u=1}^{U}}{\mathrm{argmax}} \sum_{u=1}^{U} w(I_u). \qquad (6)$$

The iterative merging method proceeds as shown in Figure 10. The computer system determines, at S1002, a candidate set of intervals

$$\mathcal{I} =$$

$$\{I_n\}_{n=1}^{N},$$

satisfying the following properties:

• each interval $I_n$ is a union of one or more adjacent portions $B_{k,t}$; and

• for $k = 2, ... K_t$, the portions $B_{k-1,t}$ and $B_{k,t}$ belong to the same interval $I_n$ if and only if $w(B_{k-1,t})$ and $w(B_{k,t})$ have the same sign.

The number N of intervals in the candidate set $\mathcal{J}$ is not predetermined, and depends on the number of sign changes in weights $w(B_{k,t})$ between neighbouring portions $B_{k,t}$.

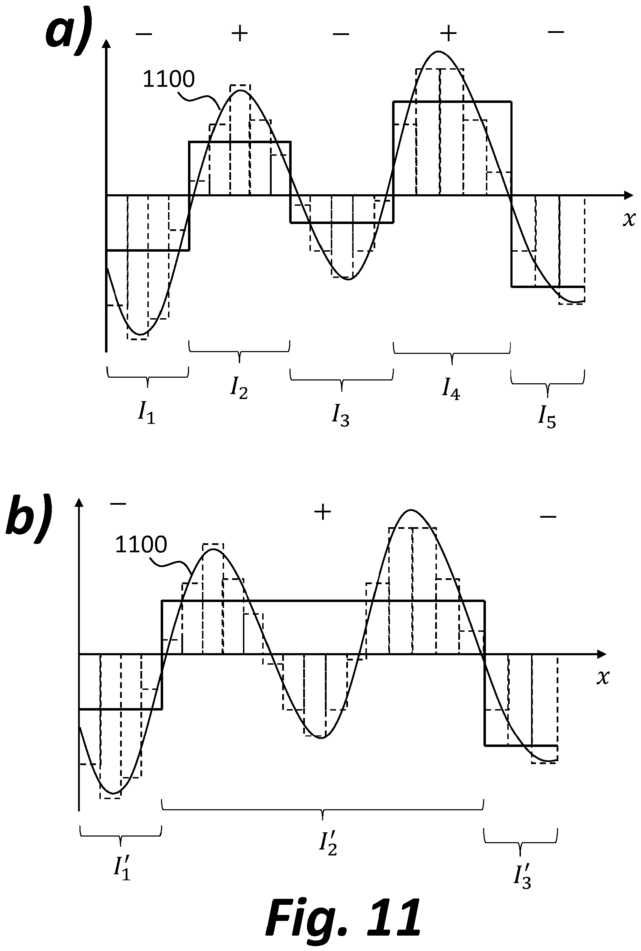

Figure 11a shows an example of a one-dimensional domain $D$ in which events occur randomly according to a rate function $\lambda(x)$. The curve 1100 represents the quantity $\lambda(x) - C$ within the domain $D$. The dashed bars represent normalised rates $\psi_{k,t}$ estimated in accordance with the present invention for a set of portions $B_{k,t}$ spanning the domain $D$. According to the present implementation, $N = 5$ intervals $I_n$ are determined in accordance with the changes of signs between neighbouring portions $B_{k,t}$. The solid bars represent the weights $w(I_n)$ for these intervals.

Returning to Figure 10, the computer system determines, at S1004, the number $N_+$ of intervals in the candidate set $\mathcal{J}$ that have positive weights, i.e. for which $w(I_n) > 0$. If the determined number $N_+$ is equal to or less than the number $U$ of sensors, the computer system selects, at S1010, the $N_+$ intervals with positive weights as the union $A_t$ of subdomains to which sensors are to be allocated. In the example of Figure 11a, the number of intervals with positive weight is given by $N_+ = 2$ (intervals $I_2$ and $I_4$). In the case that two or more sensors are to be allocated to the domain $D$, then the selected union $A_t$ of subdomains is given by $A_t = I_2 \cup I_4$.

If the number $N_+$ of intervals determined at S1004 is greater that the number $U$ of sensors, it is not possible for sensors to be assigned to all of these intervals. In this case, the computer system determines, at S1006, a set $M$ of candidate intervals for merging. The set $M$ includes each interval $I_n$ in $\mathcal{J}$ which is adjacent on both sides to intervals whose weights have higher absolute magnitudes than that of $I_n$. In other words, the set $M$ is given by the set of intervals $I_n$ for which $|w(I_n)| \le |w(I_{n-1})|$ and $|w(I_n)| \le |w(I_{n+1})|$. Clearly, this set excludes intervals at the ends of the domain $D$.

If no candidate intervals for merging are determined, or in other words if the set $M$ is empty, the computer system selects, at S1010, the $U$ intervals with the largest positive weights as the union $A_t$ of subdomains to which sensors are to be allocated.

If candidate intervals for merging are determined at S1006, i.e. the set $M$ is non-empty, the computer system identifies, at S1008, the interval in the set $M$ that has the lowest absolute weight, and merges the identified interval with the adjacent intervals on either side. In other words, the computer system merges $I_v$ with $I_{v-1}$ and $I_{v+1}$, where $v = \arg\min_M |w(I_n)|$. In the example of Figure 11a, the set $M$ of candidate intervals for merging includes only the interval $I_3$, as the adjacent intervals $I_2$ and $I_4$ both have weights with higher absolute magnitudes (as shown by the solid bars).

Having merged the intervals as described above, the computer system returns to S1002, and determines an updated candidate set $\mathcal{J}'$ of intervals in which the union of the intervals merged at S1008 is treated as a single candidate interval. Figure 11b shows an updated set $\mathcal{J}'$ of candidate intervals in which the intervals $I_2$, $I_3$, and $I_4$ of Figure 11a have been merged to form a new interval $I_2'$.

The routine of Figure 10 continues until S1010 is reached, at which point the union $A_t$ is selected and the sensors are allocated accordingly. In the example of Figure 11, in the case that a single sensor is to be assigned to the domain $D$, then the selected union $A_t$ of subdomains is given by $A_t = I_2'$.

The method of Figure 10 is guaranteed to reach an optimal solution of the optimisation problem posed at each time step. Furthermore, the computational complexity of the method of Figure 10 scales approximately linearly with the number $K_t$ of portions determined at time step $t$. More precisely, the computational cost scales asymptotically as $O(K_t \log K_t)$ as $K_t \to \infty$. Accordingly, the method of Figure 10 remains practicable, even when modest computing resources are available, in cases where a large number of portions have been determined, and where the integer program approach has become prohibitively computationally expensive.

The method of Figure 10 efficiently determines an optimal selection of subdomains at a given time step for one-dimensional domains. For domains having more than one dimension (for example, more than one spatial dimension, or a combination of spatial and temporal dimensions), the integer program approach remains applicable, but can result in high computational cost. An alternative method that is applicable for domains with more than one dimension is based on a sequential greedy method as described hereafter.

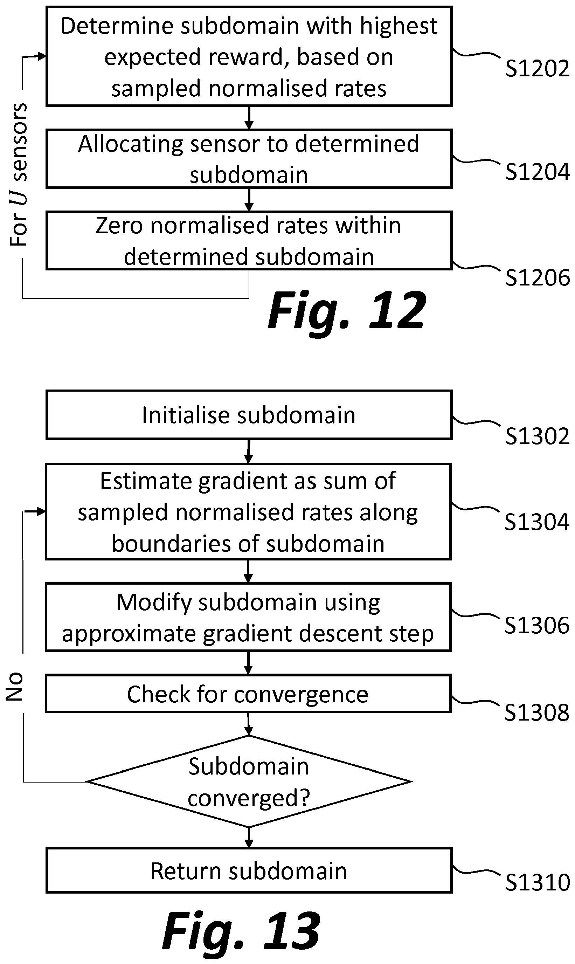

According to an implementation of the present invention, a computer system selects a union $A_t$ of subdomains according to a sequential greedy method as shown in Figure 12. The computer system determines, at S1202, a subdomain to which a single sensor is to be allocated, on the basis that the determined subdomain has the highest estimated expected reward, based on the sampled normalised rates $\psi_{k,t}$. Having determined the subdomain estimated to have the highest expected reward, the computer system allocates, at S1204, a sensor to the determined subdomain. The computer system then zeros, at S1206, the normalised rates within the determined subdomain, reflecting the fact that there is no additional benefit in having a further sensor assigned to the same subdomain. The computer system returns to the S1202 and repeats the process until U subdomains have been selected.

Unlike the integer program approach and the merging approach of Figure 10, the sequential greedy method of Figure 12 does not necessarily lead to an optimal union $A_t$ of subdomains, but the expected reward at each time step is guaranteed to be no less than 1 - 1/$e$ times the optimal expected reward at that time step. The method of Figure 12 is applicable to domains with more than one dimension. However, a brute force approach to determining the subdomain at S1202 (for example, by employing an exhaustive search) is computationally expensive and may rapidly become impracticable when a domain has been divided into a large number of portions.

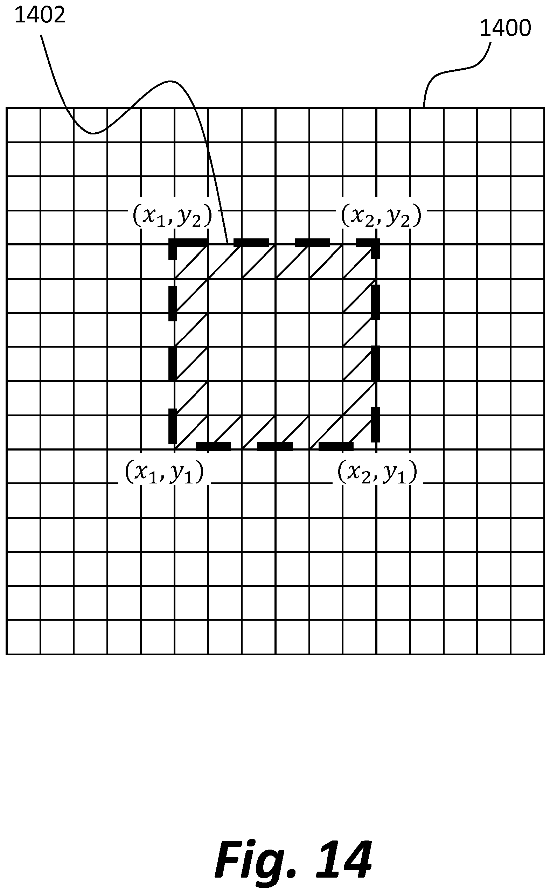

An alternative to the brute force approach of determining the subdomain at S1202 is to use a novel approximate gradient method as shown in Figure 13. According to this method, the computer system initialises, at S1302, a subdomain comprised of portions of the domain to which a sensor has not already been allocated. The subdomain must be permitted by the physical constraints of a single sensor device, and may be initialised, for example, by randomly selecting a subdomain from the permitted subdomains to which a sensor has not already been allocated. A subset of the portions contained within the subdomain are boundary portions that lie along the boundaries of the subdomain. In Figure 14, a domain 1400 is divided into a grid of square portions, and an initial subdomain 1402 is a square with corners at co-ordinates $(x_1,y_1)$, $(x_2,y_1)$, $(x_1,y_2)$, $(x_2,y_2)$ within the domain. Boundary portions (shown using diagonal lines) lie along each of the four sides of the subdomain 1402.

The computer system estimates, at S1304, the gradient of the expected reward with respect to the position of each boundary of the subdomain, where the position of each boundary is measured with respect to the outward normal at that boundary. A component of the estimated gradient with respect to the position of a given boundary is given by a sum of sampled normalised rates for boundary portions lying along that boundary. In the example of Figure 14, the expected reward as a function of the positions of the boundaries of the subdomain 1402 is given by Equation (7):

$$r(x_1, x_2, y_1, y_2) = \int_{y_1}^{y_2} \int_{x_1}^{x_2} (\lambda(x, y) - C)\mathrm{d}x\mathrm{d}y \qquad (7)$$

and the gradient $g$ of the expected reward with respect to the position of each the boundary of the subdomain 1402 is given by Equation (8):

$$g = \left(\frac{-\partial r}{\partial x_1}, \frac{\partial r}{\partial x_2}, \frac{-\partial r}{\partial y_1}, \frac{\partial r}{\partial y_2}\right)^{\mathrm{T}}, \qquad (8)$$

where the minus signs result from the fact that the positions of the boundaries are defined with respect to the outward normals. The estimation $\tilde{g}$ of the gradient $g$ determined at S1304 is given by Equation (9):

$$\tilde{g} = \left(\sum_{k \in k_1} \psi_{k,t}, \sum_{k \in k_2} \psi_{k,t}, \sum_{k \in k_3} \psi_{k,t}, \sum_{k \in k_4} \psi_{k,t}\right)^{\mathrm{T}}, \qquad (9)$$

where $k_i$ for $i$ = 1,2,3,4 are the respective sets of boundary portions lying along each of the four boundaries of the subdomain.

The computer system uses the estimated gradient to modify, at S1306, the subdomain using an approximate gradient ascent step. The positions of the boundaries with respect to the respective outward normals are displaced in the direction of the approximate gradient. In the example of Figure 14, the positions of the boundaries (with respect to the outward normals) are displaced according to Equation 10:

$$(-x_1, x_2, -y_1, y_2)^{\mathrm{T}} \to (-x_1, x_2, -y_1, y_2)^{\mathrm{T}} + \eta\,\tilde{g}, \qquad (10)$$

Where again the minus signs result from the positions of the boundaries being defined with respect to the outward normal. In Equation (10), $\eta$ is a learning parameter that may be chosen according to any method known in the art. For example, the learning parameter $\eta$ may be a small constant, or may vary according to a predetermined schedule. In some examples, following S1306 the modified subdomain is updated to correspond to a set of whole portions (in other words, the displaced positions of the boundaries are projected to a feasible set). In other examples, a subdomain does not necessarily correspond exactly to a set of whole portions, and the estimated gradient may be computed on the basis of the portions through which the boundary of the subdomains passes.

The computer system checks, at S1308, for convergence of the subdomain. Convergence may be determined, for example, if the magnitude of the approximate gradient is less than a predetermined threshold value, or if the magnitude of each component of the approximate gradient is less than a predetermined threshold value. It will be appreciated that a range of convergence criteria are known in the art, and any suitable convergence criteria may be applied without departing from the scope of the invention.

If the subdomain is determined not to have converged, the computer system returns to S1304 and iteratively performs steps S1304-S1308 until the subdomain is determined to have converged. Once the subdomain is determined to have converged, the computer system returns the converged subdomain as the subdomain with the highest expected reward, based on the sampled normalised rates.

The application of the method of Figure 13 to perform step S1202 of Figure 12 results in a computationally efficient method for determining a union $A_t$ of $U$ subdomains to which sensors are to be allocated, and is applicable for domains with any number of dimensions. Although the subdomain 1402 of Figure 14 is shown as a square for simplicity, the same method may be applied to other shapes of subdomain.

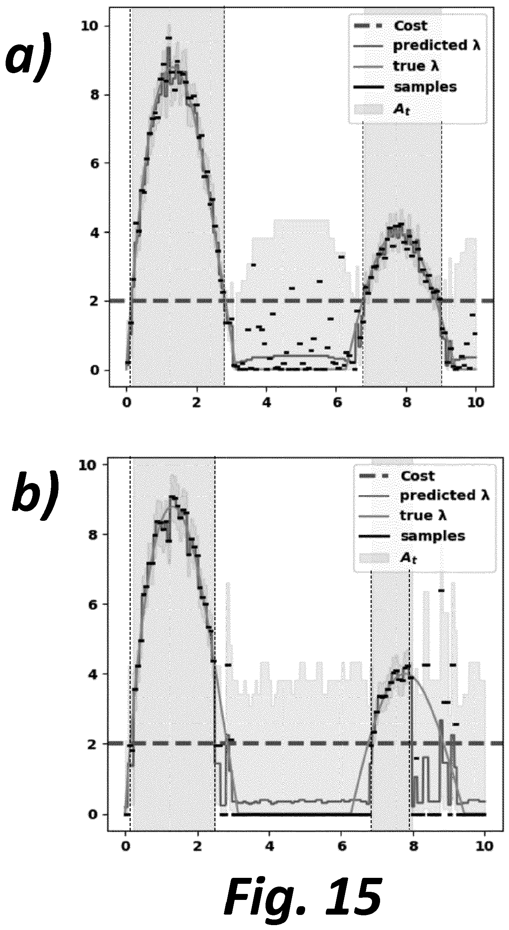

Figure 15 illustrates the performance of the method of Figure 4 in a simulation. In this example, two sensor devices are arranged to detect events generated in accordance with a predetermined bimodal rate function $\lambda(x)$. Figure 15a corresponds to the sampling approach described above with reference to Figure 8, and Figure 15b corresponds to an $\varepsilon$-greedy approach with $p = 0.01$. The plots of Figure 15 show the state of the simulation at iteration $t = 1000$. In each case, the piecewise concave curve shows the predetermined rate function $\lambda(x)$, and the horizontal dashed line shows the cost $C$. The maximum reward $r(A_t)$ is achieved by arranging the sensor device to detect events in the regions for which $\lambda(x) > C$, which in this case corresponds to the union of subdomains $A* = [[0.13,2.8], [6.75,8.82]]$. The regions between the dashed vertical lines in each case corresponds to the subdomains selected using the corresponding method. Figure 15 also shows, for each case, the predicted rate function, which is an expectation value for estimates of $\psi_{k,t}$ for each portion. Figure 15 further shows the estimates of the rate function $\psi_{k,t}$ sampled at iteration $t = 1000$. It is observed that the sampling method of Figure 8 outperforms the $\varepsilon$-greedy approach in this example. This is due to the fact that the sampling method automatically provides a solution to the exploration-exploitation dilemma. By contrast, for the $\varepsilon$-greedy approach, the balance between exploration and exploitation is dependent on the user-selected parameter $\varepsilon$. This makes the sampling method more practical for real-life applications, where selecting the parameter $\varepsilon$ is not straightforward. Further, even for an empirically-optimal selection of the parameter $\varepsilon$, the $\varepsilon$-greedy method is outperformed by the sampling method of Figure 8.

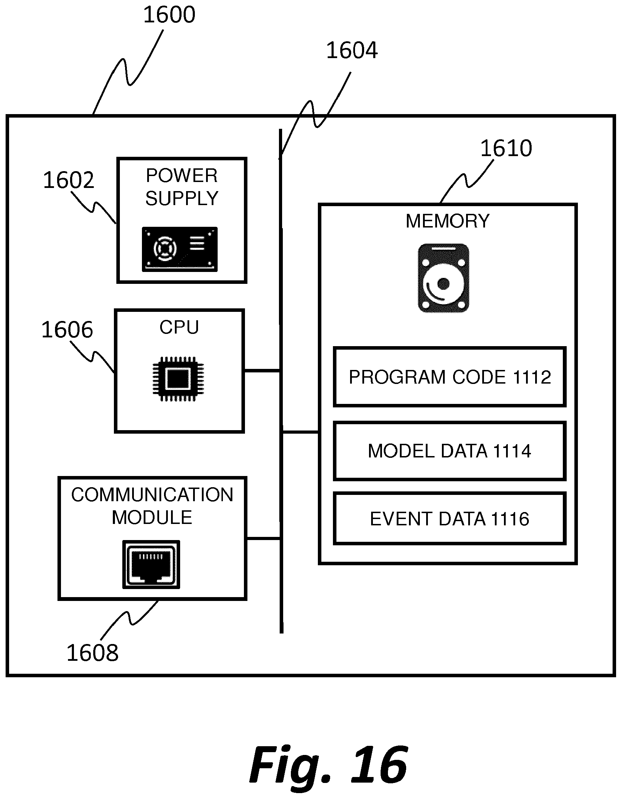

Figure 16 shows an example of a computer system 1600 arranged to implement a method in accordance with the present invention. The computer system 1600 includes a power supply 1602 and a system bus 1604. The system bus 1604 is connected to: a CPU 1606; a communication module 1608; and a memory 1610. The memory 1610 holds: program code 1612; model data 1614; and event data 1616. The model data 1614 includes parameters for determining probability distributions for the normalised rates $\psi_{k,t}$ (for example, prior parameters of the gamma distribution for the method of Figure 8, or hyperparameters of the kernel $k$ for the method of Figure 9). Executing the program code 1612 causes the CPU 1606 to, at each of a sequence of iterations: process the event data 1616 and the model data 1614 in accordance with the method of Figure 4, to determine control signals for one or more sensor devices; and transmit the determined control signals to the one or more sensor devices using the communication module 1608. In the present example, the computer system 1600 is a single computer device. In other examples, the methods described herein may be performed by a distributed computer system.

The above embodiments are to be understood as illustrative examples of the invention. Further embodiments of the invention are envisaged. For example, a computer system arranged to dynamically allocate sensor devices may include processing circuitry of the sensor devices themselves. For example, the computations necessary to dynamically allocate a fleet of UAVs may be performed in a distributed manner by the onboard processing circuitry of the UAVs. In some examples, a domain may have a spatial dimension and a temporal dimension. In this case, the methods described herein provide a means of determining when and where to allocate sensor devices. For example, in surveillance applications, sensor devices may only be deployed at certain locations within a region, at certain times of night. In some examples, the rate at which events occur may be expected to change occasionally, in which case one of the methods described herein may be combined with a change-detection mechanism, and the method may reset or otherwise be altered when such a change is detected.

**Claims**

1.  A computer-implemented method for arranging one or more sensor devices (102a,102b,202a,202b,302) for detecting events within a domain (104,204,304) having one or more dimensions, the method comprising iteratively:

determining (S402) a plurality of portions spanning the domain;
estimating (S404) a normalised rate of events being detected in each portion;
selecting (S406), in dependence on the estimated normalised rates, one or more of the determined portions on the basis of an expected reward associated with allocating the one or more sensor devices to the selected one or more portions;
arranging (S408) the one or more sensor devices to detect events in the selected one or more portions; and
receiving (S410) event data from the one or more sensor devices, the event data being indicative of dimensional co-ordinates of events detected by the one or more sensor devices within the selected one or more portions, wherein the expected reward depends on an expected rate of events being detected by the one or more sensor devices, penalised by a sensing cost associated with the arrangement of the one or more sensor devices, and wherein the selecting the one or more portions comprises sequentially, for each of the one or more sensor devices:

selecting (S1202), in dependence on the estimated normalised rates, a subdomain comprising one or more of the plurality of portions on the basis of an expected reward associated with allocating (S1204) a single sensor device to the selected subdomain; **characterised in that**
the number of determined portions increases with respect to the number of iterations in accordance with a predetermined relationship,
wherein the selecting the one or more portions further comprises sequentially, for each of the one or more sensor devices:

zeroing (S1206) the estimated normalised rates for each portion in the selected subdomain, and wherein the selecting the subdomain comprises:

initialising (S1302) an intermediate subdomain comprising a plurality of portions, a subset of the plurality of portions being boundary portions associated with one or more boundaries of the intermediate subdomain; and
iteratively:

estimating (S1304) a gradient, with respect to positions of the boundaries of the intermediate subdomain, of an expected reward associated with allocating a single sensor device to the intermediate subdomain; and
modifying (S1306) the positions of the boundaries of the intermediate subdomain on the basis of the estimated gradient, to increase the expected reward associated with allocating the single sensor device to the intermediate subdomain,

wherein the gradient at each iteration is estimated on the basis of a sum of the estimated normalised rates of events being detected in the boundary portions of the intermediate subdomain.

2. The method of claim 1, wherein estimating the normalised rate of events being detected in a portion comprises:

determining (S806,S908) a probability distribution for the normalised rate of events being detected in the portion; and
sampling (S808,S910), in accordance with the determined probability distribution, a normalised rate of events being detected in the portion.

3. The method of claim 2, wherein determining the probability distribution for the normalised rate of events being detected in the portion comprises:

determining (S802) first data comprising a count of the cumulative number of events detected by the one or more sensor devices within the portion;
determining (S804) second data comprising a count of the number of iterations for which one of the one or more sensor devices has been allocated to the portion; and
processing the first data and the second data to determine the probability distribution for the normalised rate of events being detected in the portion.

4. The method of claim 2, wherein the determining the probability distribution comprises determining parameters of a gamma distribution or a truncated gamma distribution.

5. The method of claim 2, wherein determining the probability distribution for the normalised rate of events being detected in the portion comprises:

initialising (S902) a prior Gaussian process for a latent function defined over the domain, the latent function being related to a rate of events occurring within the domain in accordance with a predetermined functional relationship;

conditioning (S904) the prior Gaussian process on event data indicative of dimensional co-ordinates of events detected by the one or more sensor devices, to determine a posterior Gaussian process;

evaluating (S906) the posterior Gaussian process within the portion to determine a respective latent distribution; and

determining (S908), from the respective latent distribution and the predetermined functional relationship, the respective probability distribution for the normalised rate of events being detected in the portion.

6. The method of any preceding claim, wherein the number of determined portions increases with respect to the number of iterations in accordance with a sublinear relationship.

7. The method of any preceding claim, wherein the sensing cost is proportional to a total extent of the selected one or more portions.

8. The method of any preceding claim, wherein each of the one or more sensor devices comprises an image sensing device.

9. The method of any preceding claim, wherein each of the one or more sensor devices is an unmanned aerial vehicle, UAV (102a,102b,202a,202b).

10. A system for detecting events within a domain 104,204,304) having one or more dimensions, the system comprising:

one or more sensor devices (102a,102b,202a,202b,302) operable to detect events within the domain; and

a computer system (100,200,300) communicatively coupled to each of the one or more sensor devices and operable to arrange the one or more sensor devices in accordance with the method of any of claims 1 to 9.

**Patentansprüche**

1. Computerimplementiertes Verfahren zum Anordnen einer oder mehrerer Sensorvorrichtungen (102a, 102b, 202a, 202b, 302) zum Erkennen von Ereignissen innerhalb einer Domäne (104, 204, 304) mit einer oder mehreren Dimensionen, wobei das Verfahren iterativ umfasst:

Bestimmen (S402) einer Vielzahl von domänenübergreifenden Abschnitten;

Schätzen (S404) einer normalisierten Rate von Ereignissen, die in jedem Abschnitt erkannt werden;

Auswählen (S406), in Abhängigkeit von den geschätzten normalisierten Raten, von einem oder mehreren der bestimmten Abschnitte auf der Basis eines erwarteten Nutzenvorteils, der mit dem Zuweisen der einen oder mehreren Sensorvorrichtungen zu dem ausgewählten einen oder den mehreren Abschnitten verbunden ist;

Anordnen (S408) der einen oder mehreren Sensorvorrichtungen zum Erkennen von Ereignissen in dem ausgewählten einen oder den mehreren Abschnitten; und

Empfangen (S410) von Ereignisdaten von der einen oder den mehreren Sensorvorrichtungen, wobei die Ereignisdaten dimensionale Koordinaten von Ereignissen angeben, die von der einen oder den mehreren Sensorvorrichtungen innerhalb des ausgewählten einen oder der ausgewählten mehreren Abschnitte erkannt wurden, wobei der erwartete Nutzenvorteil von einer erwarteten Rate von Ereignissen abhängig ist, die von der einen oder den mehreren Sensorvorrichtungen erkannt werden, unter Abzug von Erfassungskosten, die mit der Anordnung aus der einen oder den mehreren Sensorvorrichtungen verbunden sind, und wobei das Auswählen des einen oder mehreren Abschnitte für jede der einen oder mehreren Sensorvorrichtungen nacheinander umfasst:

Auswählen (S1202), in Abhängigkeit von den geschätzten normalisierten Raten, einer Subdomäne, die einen oder mehrere aus der Vielzahl von Abschnitten umfasst, auf der Basis eines erwarteten Nutzenvorteils, der mit dem Zuweisen (S1204) einer einzelnen Sensorvorrichtung zu der ausgewählten Subdomäne verbunden ist;

**dadurch gekennzeichnet, dass** die Anzahl von bestimmten Abschnitten in Bezug auf die Anzahl der Iterationen gemäß einer vorgegebenen Beziehung zunimmt, wobei ferner das Auswählen des einen oder der mehreren Abschnitte für jede der einen oder mehreren Sensorvorrichtungen nacheinander umfasst: Nullstellen (S1206) der geschätzten normalisierten Raten für jeden Abschnitt in der ausgewählten Subdomäne, und wobei das Auswählen der Subdomäne umfasst: Initialisieren (S1302) einer Zwischensubdomäne, die eine Vielzahl von Abschnitten umfasst, wobei eine Teilmenge der Vielzahl von Abschnitten Grenzabschnitte sind, die einer oder mehreren Grenzen der Zwischensubdomäne zugeordnet sind; und iterativ:

Schätzen (S1304) eines Gradienten, in Bezug auf Positionen der Grenzen der Zwischensubdomäne, eines erwarteten Nutzenvorteils, der mit dem Zuweisen einer einzelnen Sensorvorrichtung zu der Zwischensubdomäne verbunden ist; und

Modifizieren (S1306) der Positionen der Grenzen der Zwischensubdomäne auf der Basis des geschätzten Gradienten, um der erwarteten Nutzenvorteil zu erhöhen, der mit dem Zuweisen der einzelnen Sensorvorrichtung zur Zwischensubdomäne verbunden ist, wobei der Gradient bei jeder Iteration auf der Basis einer Summe der geschätzten normalisierten Raten von Ereignissen, die in den Grenzabschnitten der Zwischensubdomäne erkannt werden, geschätzt wird.

2. Verfahren nach Anspruch 1, wobei das Schätzen der normalisierten Rate von Ereignissen, die in einem Abschnitt erkannt werden, umfasst:

Bestimmen (S806, S908) einer Wahrscheinlichkeitsverteilung für die normalisierte Rate von Ereignissen, die in dem Abschnitt erkannt werden; und

Abtasten (S808, S910) gemäß der ermittelten Wahrscheinlichkeitsverteilung, einer normalisierten Rate von Ereignissen, die in dem Abschnitt erkannt werden.

3. Verfahren nach Anspruch 2, wobei das Bestimmen der Wahrscheinlichkeitsverteilung für die normalisierte Rate von Ereignissen, die in dem Abschnitt erkannt werden, umfasst:

Bestimmen (S802) von ersten Daten, die einen Zählstand der kumulierten Anzahl von Ereignissen umfassen, die von der einen oder den mehreren Sensorvorrichtungen innerhalb des Abschnitts erkannt werden;

Bestimmen (S804) von zweiten Daten, die einen Zählstand der Anzahl von Iterationen umfassen, über die eine von der einen oder den mehreren Sensorvorrichtungen dem Abschnitt zugewiesen wurde; und

Verarbeiten der ersten Daten und der zweiten Daten, um die Wahrscheinlichkeitsverteilung für die normalisierte Rate von Ereignissen zu bestimmen, die in dem Abschnitt erkannt werden.

4. Verfahren nach Anspruch 2, wobei das Bestimmen der Wahrscheinlichkeitsverteilung das Bestimmen von Parametern einer Gammaverteilung oder einer abgeschnittenen Gammaverteilung umfasst.

5. Verfahren nach Anspruch 2, wobei das Bestimmen der Wahrscheinlichkeitsverteilung für die normalisierte Rate von Ereignissen, die in dem Abschnitt erkannt werden, umfasst:

Initialisieren (S902) eines A-priori-Gauß-Prozesses für eine über die Domäne definierte latente Funktion, wobei die latente Funktion mit einer Rate von Ereignissen in Beziehung steht, die innerhalb der Domäne gemäß einer vorgegebenen funktionalen Beziehung auftreten;

Konditionieren (S904) des A-priori-Gauß-Prozesses auf Ereignisdaten, die dimensionale Koordinaten von Ereignissen angeben, die von der einen oder den mehreren Sensorvorrichtungen erkannt wurden, um einen A-posteriori-Gauß-Prozess zu bestimmen;

Auswerten (S906) des A-posteriori-Gauß-Prozesses innerhalb des Abschnitts, um eine jeweilige latente Verteilung zu bestimmen; und

Bestimmen (S908), aus der jeweiligen latenten Verteilung und der vorgegebenen funktionalen Beziehung, der jeweiligen Wahrscheinlichkeitsverteilung für die normalisierte Rate von Ereignissen, die in dem Abschnitt erkannt werden.

6. Verfahren nach einem der vorstehenden Ansprüche, wobei die Anzahl von bestimmten Abschnitten in Bezug auf die Anzahl von Iterationen gemäß einer sublinearen Beziehung zunimmt.

**7.** Verfahren nach einem der vorstehenden Ansprüche, wobei die Erfassungskosten proportional zu einer Gesamterstreckung des ausgewählten einen oder der mehreren Abschnitte sind.

**8.** Verfahren nach einem der vorstehenden Ansprüche, wobei jede der einen oder mehreren Sensorvorrichtungen eine Bilderfassungsvorrichtung umfasst.

**9.** Verfahren nach einem der vorstehenden Ansprüche, wobei jede der einen oder mehreren Sensorvorrichtungen ein unbemanntes Luftfahrzeug, UAV (102a, 102b, 202a, 202b) ist.

**10.** System zum Erkennen von Ereignissen innerhalb einer Domäne (104, 204, 304) mit einer oder mehreren Dimensionen, wobei das System umfasst:

eine oder mehrere Sensorvorrichtungen (102a, 102b, 202a, 202b, 302), die zum Erkennen von Ereignissen innerhalb der Domäne betreibbar sind; und
ein Computersystem (100, 200, 300), das kommunikativ mit jeder der einen oder mehreren Sensorvorrichtungen gekoppelt ist und betreibbar ist, um die eine oder mehreren Sensorvorrichtungen gemäß dem Verfahren nach einem der Ansprüche 1 bis 9 anzuordnen.

**Revendications**

**1.** Procédé mis en œuvre par ordinateur destiné à agencer un ou plusieurs dispositifs de détection (102a, 102b, 202a, 202b, 302) pour détecter des événements à l'intérieur d'un domaine (104, 204, 304) ayant une ou plusieurs dimensions, le procédé comprenant itérativement :

la détermination (S402) d'une pluralité de parties couvrant le domaine ;
l'estimation (S404) d'un taux normalisé d'événements détectés dans chaque partie ;
la sélection (S406), en fonction des taux normalisés estimés, d'une ou plusieurs parties déterminées sur la base d'une récompense attendue associée à l'attribution du ou des dispositifs de détection à la ou aux parties sélectionnées ;
l'agencement (S408) du ou des dispositifs de détection pour détecter des événements dans la ou les parties sélectionnées ; et
la réception (S410) des données d'événement du ou des dispositifs de détection, les données d'événement étant indicatives des coordonnées dimensionnelles des événements détectés par le ou les dispositifs de détection à l'intérieur de la ou des parties sélectionnées, la récompense attendue dépendant d'un taux d'événements détectés par le ou les dispositifs de détection, pénalisée par un coût de détection associé à l'agencement du ou des dispositifs de détection, et la sélection de la ou des parties comprenant séquentiellement, pour chacun du ou des dispositifs de détection :

la sélection (S1202), en fonction des taux normalisés estimés, d'un sous-domaine comprenant une ou plusieurs parmi la pluralité de parties sur la base d'une récompense attendue associée à l'attribution (S1204) d'un dispositif de détection unique au sous-domaine sélectionné ;
**caractérisé en ce que** le nombre de parties déterminées augmente par rapport au nombre d'itérations conformément à une relation prédéterminée, la sélection de la ou des parties comprenant en outre séquentiellement, pour chacun du ou des dispositifs de détection :
la remise à zéro (S1206) des taux normalisés estimés pour chaque partie dans le sous-domaine sélectionné, et la sélection du sous-domaine comprenant :

le lancement (S1302) d'un sous-domaine intermédiaire comprenant une pluralité de parties, un sous-ensemble de la pluralité de parties étant des parties de limite associées à une ou plusieurs limites du sous-domaine intermédiaire ; et
itérativement :

l'estimation (S1304) d'un gradient, par rapport aux positions des limites du sous-domaine intermédiaire, d'une récompense attendue associée à l'attribution d'un dispositif de détection unique au sous-domaine intermédiaire ; et
la modification (S1306) des positions des limites du sous-domaine intermédiaire sur la base du gradient estimé, pour augmenter la récompense attendue associée à l'attribution du dispositif de détection unique au sous-domaine intermédiaire, le gradient à chaque itération étant estimé sur la base d'une somme des taux normalisés estimés d'événements détectés dans les parties limites du sous-domaine intermédiaire.

2. Procédé selon la revendication 1, dans lequel l'estimation du taux normalisé d'événements détectés dans une partie comprend :

la détermination (S806, S908) d'une distribution de probabilité pour le taux normalisé d'événements détectés dans la partie ; et

l'échantillonnage (S808, S910), conformément à la distribution de probabilité déterminée, d'un taux normalisé d'événements détectés dans la partie.

3. Procédé selon la revendication 2, dans lequel la détermination de la distribution de probabilité pour le taux normalisé d'événements détectés dans la partie comprend :

la détermination (S802) des premières données comprenant un décompte du nombre cumulé d'événements détectés par le ou les dispositifs de détection dans la partie ;

la détermination (S804) de secondes données comprenant un décompte du nombre d'itérations pour lesquelles l'un parmi le ou les dispositifs de détection a été attribué à la partie ; et

le traitement des premières données et des secondes données pour déterminer la distribution de probabilité pour le taux normalisé d'événements détectés dans la partie.

4. Procédé selon la revendication 2, dans lequel la détermination de la distribution de probabilité comprend la détermination de paramètres d'une distribution gamma ou d'une distribution gamma tronquée.

5. Procédé selon la revendication 2, dans lequel la détermination de la distribution de probabilité pour le taux normalisé d'événements détectés dans la partie comprend :

le lancement (S902) d'un processus gaussien antérieur pour une fonction latente définie sur le domaine, la fonction latente étant liée à un taux d'événements se produisant dans le domaine conformément à une relation fonctionnelle prédéterminée ;

le conditionnement (S904) du processus gaussien antérieur sur des données d'événement indicatives des coordonnées dimensionnelles des événements détectés par le ou les dispositifs de détection, pour déterminer un processus gaussien postérieur ;

l'évaluation (S906) du processus gaussien postérieur dans la partie pour déterminer une distribution latente respective ; et

la détermination (S908), à partir de la distribution latente respective et de la relation fonctionnelle prédéterminée, de la distribution de probabilité respective pour le taux normalisé d'événements détectés dans la partie.

6. Procédé selon l'une quelconque des revendications précédentes, dans lequel le nombre de parties déterminées augmente par rapport au nombre d'itérations conformément à une relation sous-linéaire.

7. Procédé selon l'une quelconque des revendications précédentes, dans lequel le coût de détection est proportionnel à une étendue totale de la ou des parties sélectionnées.

8. Procédé selon l'une quelconque des revendications précédentes, dans lequel chacun du ou des dispositifs de détection comprend un dispositif de détection d'image.

9. Procédé selon l'une quelconque des revendications précédentes, dans lequel chacun du ou des dispositifs de détection est un véhicule aérien sans pilote, UAV (102a, 102b, 202a, 202b).

10. Système destiné à détecter des événements dans un domaine (104, 204, 304) ayant une ou plusieurs dimensions, le système comprenant :

un ou plusieurs dispositifs de détection (102a, 102b, 202a, 202b, 302) pouvant fonctionner pour détecter des événements dans le domaine ; et

un système informatique (100, 200, 300) couplé en communication à chacun du ou des dispositifs de détection et pouvant fonctionner pour agencer le ou les dispositifs de détection conformément au procédé de l'une quelconque des revendications 1 à 9.

**Fig. 1**

**Fig. 2**

**Fig. 3**

```
┌─────────────────────────────────────┐
│     Determine portions of domain     │ ──── S402
└─────────────────────────────────────┘
                  │
                  ▼
┌─────────────────────────────────────┐
│     Estimate average rate of events  │
│     being detected in each portion   │ ──── S404
└─────────────────────────────────────┘
                  │
                  ▼
┌─────────────────────────────────────┐
│      Select portion(s) on basis of   │
│            expected reward           │ ──── S406
└─────────────────────────────────────┘
                  │
                  ▼
┌─────────────────────────────────────┐
│     Arrange sensor devices to detect │
│       events in selected portion(s)  │ ──── S408
└─────────────────────────────────────┘
                  │
                  ▼
┌─────────────────────────────────────┐
│          Receive event data          │
└─────────────────────────────────────┘
                          ──── S410
```

At each time step

# Fig. 4

$t = 1$

$D$

$W$

$t = t_1$

$W/2$

$t = t_2$

$W/4$

$t = t_3$

$W/8$

**Fig. 5**

**Fig. 6**

**Fig. 7**

Determine count of cumulative number
of events detected by sensors in portion ⟩ S802

Determine count of number of time
steps for which a sensor device has been ⟩ S804
allocated to portion

Determine probability distribution for
normalised rate of events being ⟩ S806
detected in portion

Sample normalised rate from
determined probability distribution ⟩ S808

*Fig. 8*

Initialise prior Gaussian process for latent function defined over domain — S902

Condition prior distribution on event data to determine posterior Gaussian process — S904

Evaluate posterior Gaussian process within each portion, to determine respective posterior distributions for the latent function evaluated within each portion — S906

Determine, from respective posterior distributions for latent function evaluations, respective posterior distributions for normalised rate of events being detected — S908

Sample normalised rates from determined posterior distributions — S910

*Fig. 9*

Determine candidate set of intervals — S1002

Determine number of intervals with positive weight — S1004

Greater than number of sensors?

Yes

No

Determine candidate intervals for merging — S1006

Candidate merges exist?

Yes

No

Identify interval for merging and perform merge — S1008

Select intervals in candidate set with largest positive weights — S1010

# Fig. 10

Fig. 11

Determine subdomain with highest expected reward, based on sampled normalised rates — S1202

Allocating sensor to determined subdomain — S1204

Zero normalised rates within determined subdomain — S1206

For $U$ sensors

## Fig. 12

Initialise subdomain — S1302

Estimate gradient as sum of sampled normalised rates along boundaries of subdomain — S1304

Modify subdomain using approximate gradient descent step — S1306

Check for convergence — S1308

Subdomain converged?

No

Return subdomain — S1310

## Fig. 13

Fig. 14

**Fig. 15**

1600

1604

1610

1602

POWER
SUPPLY

MEMORY

1606

CPU

1608

COMMUNICATION
MODULE

PROGRAM CODE 1112

MODEL DATA 1114

EVENT DATA 1116

*Fig. 16*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. A. GRANT.** *Adaptive Policies for Perimeter Surveillance Problems*

- **M. P. WAND.** *Data-Based Choice of Histogram Bin Width*